Europäisches Patentamt

European Patent Office

Office européen des brevets

(19)

(11) **EP 1 294 142 A2**

(12) **EUROPEAN PATENT APPLICATION**

(43) Date of publication:
 **19.03.2003 Bulletin 2003/12**

(51) Int Cl.⁷: **H04L 12/56**

(21) Application number: **02078161.3**

(22) Date of filing: **01.08.2002**

(84) Designated Contracting States:
 **AT BE BG CH CY CZ DE DK EE ES FI FR GB GR
 IE IT LI LU MC NL PT SE SK TR**
 Designated Extension States:
 **AL LT LV MK RO SI**

(30) Priority: **31.08.2001 GB 0121134**

(71) Applicant: **ROKE MANOR RESEARCH LIMITED
 Romsey, Hampshire SO51 0ZN (GB)**

(72) Inventors:
 • **Edwin, Richard
  Southampton, Hampshire SO15 4HU (GB)**
 • **Reeve, Andrew
  Winchester, Hampshire SO22 5AH (GB)**

(74) Representative: **Payne, Janice Julia et al
 Siemens AG,
 Postfach 22 16 34
 80506 München (DE)**

(54) **A method of deriving a metric for a link in a network**

(57)  A method of deriving a metric for a link in a network, the network having a plurality of nodes (A-G) and links between nodes comprises for each link applying a weighting factor to the physical link length, the link occupancy and the number of transponders on a link and summing the weighted values of link length, link occupancy and number of transponders to derive a metric for that link. Further, a method of routing a path through a network comprises selecting a start point (A) and an end point (B) for the desired path; applying a metric attributed to each link which has been derived by a method in accordance with the above method; and connecting the path between the start point and end point through the links and nodes which give a lowest total metric of any such path.

## FIG 3

EP 1 294 142 A2

## Description

This invention relates to a method of deriving a metric for a link in a network, in particular for optical networks.

In optical networks, a signal is transmitted from node to node along links. To maintain the quality of the signal from start to finish, each node which receives the signal, regenerates, resynchronises and retimes it before sending it across a link to the next node. There is a cost to the user in this method and different nodes and links have a different cost allocated to them, known as a metric. Some nodes include transponders which change the signal wavelength in order to transmit it onwards.

Routing algorithms to calculate efficient routes through a network are known. One example of a standard algorithm is the shortest path first algorithm (SPF). This algorithm calculates the best route through a network based on a metric associated with the link. The algorithm knows the complete topology of the network and can therefore calculate the shortest path from any source to any destination node. However, this algorithm is entirely dependent on the accuracy of the metric, but this is generally a simple value based on the transmission delay, monetary cost or administrative cost for example. These are configured during network deployment.

EP 1014627 describes a method of routing a signal through a network known as constrained shortest path routing and describes an algorithm for calculating a constrained route through a network.

There are a number of factors which need to be taken into account when selecting a path, such as overall length, number of nodes traversed, special equipment used, expense of using third party links. However attempting to find a route which is optimal across a number of variables is computationally very complex.

In accordance with a first aspect of the present invention, a method of deriving a metric for a link in a network, the network having a plurality of nodes and links between nodes comprises for each link applying a weighting factor to the physical link length, the link occupancy and the number of transponders on a link and summing the weighted values of link length, link occupancy and number of transponders to derive a metric for that link.

The present invention calculates the metric or cost applicable to any given link based on multiple factors and allows the most efficient path through a network to be chosen using those links, within given constraints which the metric takes into account. This invention provides a technique for combining all such factors into one simple scalar metric which can be optimised. The calculated metric can be used by any standard routing protocol.

Preferably, the metric further comprises a weight for the number of links and nodes from a start point of a path in the network to the link in question.

Generally, it is better to keep the number of hops involved to a minimum, but in some cases this may have no effect on the choice of route. For these cases, the weight would be set to zero.

Preferably, the metric further comprises a weight for a link belonging to another network operator and may also comprise a weight for quality of a service using the link.

Network operators often charge a premium for use of their network by others. The network operator will prefer to limit use of high quality links to the high quality services for which they are essential. Lower quality services can use cheaper links, thereby reducing the infrastructure costs. Pricing low quality services off these links, keeps down the network operator's costs.

In accordance with a second aspect of the present invention a method of routing a path through a network comprises selecting a start point and an end point for the desired path; applying a metric attributed to each link which has been derived by a method in accordance with the first aspect; and connecting the path between the start point and end point through the links and nodes which give the lowest total metric of any such path.

The invention is applicable to various networks, such as any network technology where routers are connected together by links which have properties which could form part of a metric, such as a number of repeaters, transponders or an occupancy factor, but preferably, the network comprises an optical network.

Preferably, a weighted sum is applied for optimisation across a number of factors.

Preferably, the method is applied to a general set of scalar metrics.

An example of a method of deriving a metric for a link in a network according to the present invention will now be described with reference to the accompanying drawing in which:-

Figure 1 illustrates routing using a conventional SPF algorithm;
Figure 2 illustrates routing using a constrained SPF algorithm; and,

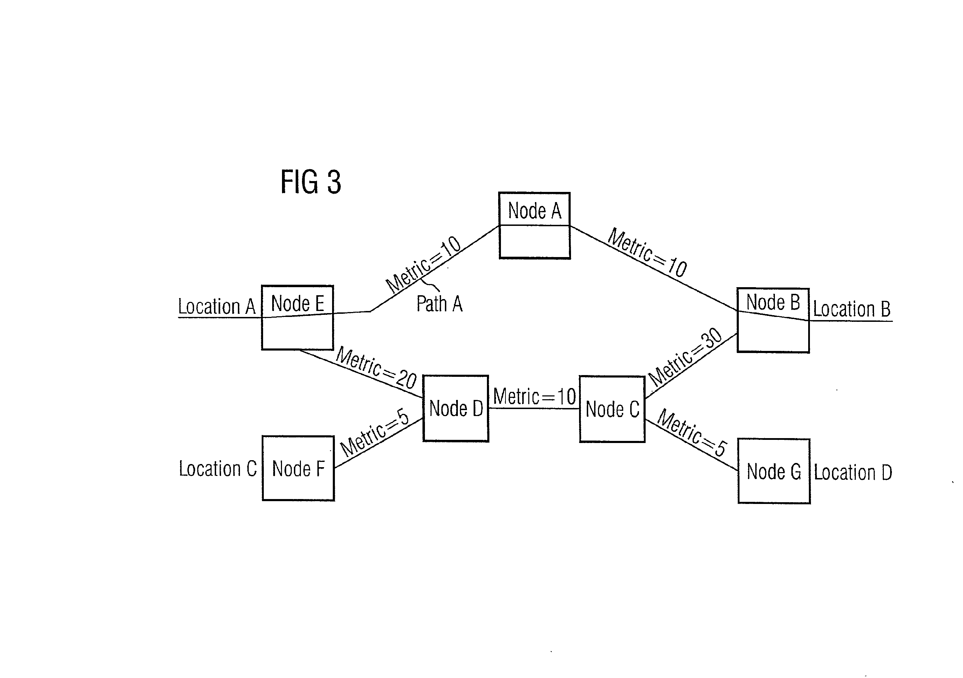

Figure 3 illustrates a network in which metrics have been derived in accordance with the present invention.

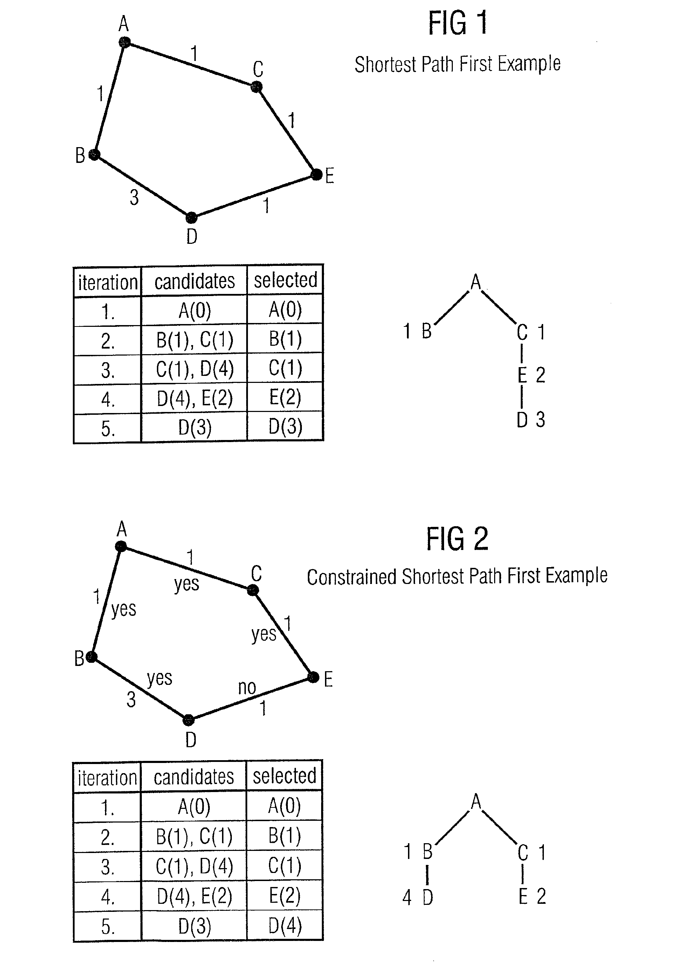

Operation of a SPF algorithm for a five node network is illustrated in Fig. 1. Nodes A to E are joined by links. Each link has its metric marked alongside. The desired route is between A and D, but this can either go via B or via C and E. To determine the preferred route, SPF builds a tree from node A until it includes the destination, node D. The shortest path, determined by the total metric, is then chosen. In this example, it can be seen that the route via C and E is preferred as the total metric is 3, whereas the route via B has a metric of 4.

An example of constrained SPF is shown in Fig. 2. The network has the same number of nodes and the desired route is, as before, from A to D. As well as considering the total metric, additional constraints are applied and compliance with these is marked as "yes". At each link, these constraints are evaluated. A link can only be used if the constraints are met. The result of this is that, although the route via C and E has a lower metric, the route via B is chosen because the link between E and D fails to meet the constraints.

Fig, 3 illustrates an example of how the present invention is used to calculate a metric for a link of a network which allows optimisation of the route chosen through the network . Other factors may be applied dependent on network and technology. The network has 7 nodes, A to G and 4 locations, 1 to 4. Each link between the nodes is allocated a metric. This metric is calculated from the following formula:

$$m = m_0 + w_1*d + w_2*o + W_3*t$$

where

$m_0$    represents the cost of each additional stage
$d$    is the physical length of the link
$o$    is the fraction of the link used (the occupancy)
$t$    is the number of transponders on the link
$w;$    are weights

Discarding nodes F and G, examples are shown in the table below which assumes that $m_0 = 5$, $w_0 = 5$, $w_1 = 2$, $w_3 = 10$.

At this point there are no connections so that the occupancies are all 0.

| Link | d | o | t | m |
|------|---|---|---|---|
| E-A | 1 | 0 | 0 | 10 |
| A-B | 1 | 0 | 0 | 10 |
| B-C | 1 | 0 | 2 | 30 |
| C-D | 1 | 0 | 0 | 10 |
| D-E | 3 | 0 | 0 | 20 |

Now assume that each link can support only two connections and a connection is set up from location A to location B, via E-A-B. The metrics are updated as follows:

| Link | d | O | t | M |
|------|---|---|---|---|
| E-A | 1 | 0.5 | 0 | 11 |
| A-B | 1 | 0.5 | 0 | 11 |
| B-C | 1 | 0 | 2 | 30 |

(continued)

| C-D | 1 | 0 | 0 | 10 |
|------|---|---|---|---|
| D-E | 3 | 0 | 0 | 20 |

Note that route D-C-B is now cheaper than D-E-A-B, whereas before they had equal cost.

The formula for calculating the metric for each link is chosen to support the requirement that the total number of transit nodes, the total length of the route and the total number of transponders are minimised and that where there is a choice of routes having satisfied these criteria, links with lower occupancy (by wavelength or channel) are preferred.

Further constraints may be applied, which can be straightforward or more complex, such as supported signal formats. For example, a weight may be applied for the number of links which span a network belonging to a different operator, as such links are likely to carry a higher cost than using links all in the same network. Alternatively, the weights may be applied such that a high quality service using a particular link is given a lower weighting, i.e. lower cost, than a low quality service using the same link. This protects the link for high quality service users. For example, optical multiplex section protection (OMSP) and optical channel protection (OchP) links.

The present invention is applicable to any type of network, but is particularly suitable for increasing efficiency of optical networks.

**Claims**

1. A method of deriving a metric for a link in a network, the network having a plurality of nodes and links between nodes, the method comprising for each link applying a weighting factor to the physical link length, the link occupancy and the number of transponders on a link and summing the weighted values of link length, link occupancy and number of transponders to derive a metric for that link.

2. A method according to claim 1, wherein the metric further comprises a weight for the number of links and nodes from a start point of a path in the network to the link in question.

3. A method according to claim 1 or claim 2, wherein the metric further comprises a weight for a link belonging to another network operator.

4. A method according to any preceding claim, wherein the metric further comprises a weight for quality of a service using the link.

5. A method of routing a path through a network, the method comprising selecting a start point and an end point for the desired path; applying a metric attributed to each link which has been derived by a method in accordance with any preceding claim; and connecting the path between the start point and end point through the links and nodes which give a lowest total metric of any such path.

6. A method according to any preceding claim, wherein the network is an optical network.

7. A method according to any preceding claim, wherein a weighted sum is applied for optimisation across a number of factors.

8. A method according to any preceding claim, wherein the method is applied to a general set of scalar metrics.

## FIG 1

Shortest Path First Example

| iteration | candidates | selected |
|-----------|------------|----------|
| 1. | A(0) | A(0) |
| 2. | B(1), C(1) | B(1) |
| 3. | C(1), D(4) | C(1) |
| 4. | D(4), E(2) | E(2) |
| 5. | D(3) | D(3) |

## FIG 2

Constrained Shortest Path First Example

| iteration | candidates | selected |
|-----------|------------|----------|
| 1. | A(0) | A(0) |
| 2. | B(1), C(1) | B(1) |
| 3. | C(1), D(4) | C(1) |
| 4. | D(4), E(2) | E(2) |
| 5. | D(3) | D(4) |

# FIG 3

Node A

Metric=10

Metric=10

Location A | Node E

Path A

Node B | Location B

Metric=20

Metric=30

Metric=10

Node D

Node C

Metric=5

Location C | Node F

Node G | Location D

Metric=5

EP 1 294 142 A2